(19) Europäisches Patentamt
European Patent Office
Office européen des brevets

(11) **EP 3 681 739 B1**

(12) **FASCICULE DE BREVET EUROPEEN**

(45) Date de publication et mention de la délivrance du brevet:
**27.10.2021 Bulletin 2021/43**

(21) Numéro de dépôt: **18780192.3**

(22) Date de dépôt: **14.09.2018**

(51) Int Cl.:
*B60C 19/00* (2006.01)   *B60C 23/06* (2006.01)
*B60W 40/06* (2012.01)   *B60T 8/172* (2006.01)

(86) Numéro de dépôt international:
**PCT/FR2018/052257**

(87) Numéro de publication internationale:
**WO 2019/053384 (21.03.2019 Gazette 2019/12)**

(54) **METHODE D'EVALUATION DE LA FERMETE D'UN SOL**

VORRICHTUNG ZUR BEWERTUNG DER FESTIGKEIT EINES BODENS

DEVICE FOR EVALUATING THE FIRMNESS OF A GROUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2017 FR 1758531**

(43) Date de publication de la demande:
**22.07.2020 Bulletin 2020/30**

(73) Titulaire: **Compagnie Générale des Etablissements Michelin**
**63000 Clermont-Ferrand (FR)**

(72) Inventeurs:
• **BEGOU, Pierre-Alain**
  **63040 Clermont-Ferrand Cedex 9 (FR)**
• **PATURLE, Antoine**
  **63040 Clermont-Ferrand Cedex 9 (FR)**
• **VACHERAND, Jean-Michel**
  **63040 Clermont-Ferrand Cedex 9 (FR)**
• **BOUHADIDA, Oussama**
  **63040 Clermont-Ferrand Cedex 9 (FR)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 887 211    US-A1- 2003 154 007**

**Description**

**Domaine de l'invention**

La présente invention concerne une méthode d'évaluation de la fermeté d'un sol sur lequel roule un ensemble monté comprenant une enveloppe pneumatique équipée d'un dispositif de mesure de la déformation de l'enveloppe pneumatique.

**Arrière-plan technologique**

Dans certains cas d'application, il est primordial de s'intéresser à la fermeté du sol sur lequel s'appuie l'enveloppe pneumatique afin d'adapter les conditions d'usage de l'ensemble monté aux paramètres du sol pour ne pas dégrader le sol et/ou l'ensemble monté et en particulier l'enveloppe pneumatique. De plus, la qualification d'un sol et notamment sa fermeté revêt un intérêt certain pour ceux qui exploitent directement ou indirectement cet élément comme par exemple les agriculteurs. Pour des routes asphaltées ou bétonnées dont la structure repose sur des fondations solides afin d'obtenir une certaine rigidité, les conditions normatives d'usage de l'ensemble monté minimisent les interactions entre le sol et l'ensemble monté. De ce fait la fermeté du sol qui correspond à la rigidité du sol sur une certaine épaisseur par rapport à la surface extérieure ne présente que peu d'intérêt dans ces cas spécifiques. En revanche pour les sols dits meubles, les interactions entre le sol et l'ensemble monté sont beaucoup plus fortes comme par exemple les chemins pierreux, les sols sableux, les champs agricoles. Il est important de définir la fermeté de ces sols pour régler les conditions d'usage de l'ensemble monté telles que la pression de gonflage, la charge portée ou la vitesse de roulage pour d'une part optimiser l'efficacité de l'ensemble monté dans sa fonction de mobilité et d'autre part ne pas modifier voire endommager les caractéristiques du sol. C'est principalement à ce type d'application que l'invention s'adresse.

Un sol est un assemblage de trois phases : une phase gazeuse, une phase liquide et une phase solide dont les proportions entre les trois phases définissent les caractéristiques du sol. Si le sol est sensible à la teneur en eau, le sol se présente sous trois types d'états qualifiés de solide, plastique et liquide selon sa teneur en eau. Le passage d'un état à l'autre détermine la facilité de travail du sol ou de mobilité sur ce sol.

Divers tests en laboratoire permettent de déterminer la sensibilité à la teneur en eau d'un sol au travers par exemple des limites d'Atterberg permettant de définir les zones de transition en fonction de la teneur en eau entre les trois états d'un sol selon la norme NFP94057. Enfin d'autres essais normatifs sur sol réel permettent d'identifier l'état hydrique d'un sol donné tel que l'évaluation de l'indice optimum protor selon la norme NFP94093 ou l'évaluation de l'IPI (acronyme de « Indice Portant Immédiat ») selon la NFP94078. Cependant ces essais statiques ne sont pas facilement interprétables. Ils dépendent à la fois de la nature du sol et de sa teneur en eau. Le second paramètre évolue forcement entre les saisons de l'année ou entre des périodes plus courtes. De ce fait, le besoin d'une mesure instantanée de la fermeté du sol au moment où le véhicule roule en direct s'est exprimé. Cette information instantanée de la fermeté d'un sol permet d'adapter les conditions d'usage du véhicule telles que par exemple la vitesse de roulage ou la pression de gonflage aux caractéristiques du sol.

D'autre part, les interactions entre le sol et l'enveloppe pneumatique existent et sont directement observables au travers de grandeurs physiques de l'enveloppe pneumatique telle que la dimension de l'aire de contact. Divers moyens de mesure embarqués dans l'enveloppe pneumatique ont été développés ces dernières années afin d'évaluer ces grandeurs physiques. Par exemple, EP3031632A2 emploie un détecteur de mouvement pour identifier indirectement les azimuts circonférentiels du pneumatique correspondant à l'entrée et la sortie de l'aire de contact. De ce fait une évaluation de la dimension de l'aire de contact est effectuée construite sur des mesures localisées. Ainsi l'utilisation d'une enveloppe pneumatique comme détecteur de grandeurs physiques relatives à l'interaction entre l'ensemble monté et le sol est démontrée. Néanmoins, aucun lien entre la fermeté d'un sol et les grandeurs de déformation d'une enveloppe pneumatique n'a été établi.

Une méthode d'évaluation de la fermeté d'un sol est décrite dans la demande US2003/0154007 A1.

EP0887211 A1 décrit un capteur sensible à la courbure circonférentielle positionné au droit du sommet de l'enveloppe pneumatique.

L'invention vise à proposer une méthode de mesure instantanée de la fermeté d'un sol au travers d'une mesure sur l'enveloppe pneumatique d'un ensemble monté d'un véhicule en condition d'usage à destination du conducteur du véhicule sans nuire à l'efficacité de son travail.

**Définitions techniques**

Dans ce qui suit, on entend par :

-  « **direction axiale** », la direction suivant la longueur du véhicule de transport depuis l'avant du véhicule vers l'arrière de celui-ci,
- « **direction verticale** », la direction suivant la normale au sol,
- « **direction transversale** », la direction formant un trièdre direct avec les directions verticale et axiale,
- « **ensemble monté** », dispositif comprenant au moins une enveloppe pneumatique et une roue constituée d'un disque et d'une jante dans un état monté et gonflé.

**Description de l'invention**

L'invention porte sur méthode d'évaluation de la fermeté d'un sol sur lequel roule un véhicule équipé d'au moins un ensemble monté présentant une rigidité radiale $k_{radial}$. Cet ensemble monté comprend une enveloppe pneumatique ayant un sommet, deux flancs et deux bourrelets. L'enveloppe pneumatique est équipée d'un capteur sensible à la courbure circonférentielle positionné au droit du sommet. La méthode d'évaluation de la fermeté d'un sol comprend les étapes suivantes :

- Estimer une valeur de courbure $\rho_A$ de l'enveloppe pneumatique correspondant à un premier régime permanent de l'enveloppe pneumatique en contact avec le sol ;

- Evaluer la fermeté relative du sol par rapport à la rigidité radiale $k_{radial}$ de l'ensemble monté comme une fonction de la valeur de courbure $\rho_A$ de l'enveloppe pneumatique dans le premier régime permanent.

On entend ici par le terme « capteur sensible à la courbure circonférentielle » que le capteur délivre une grandeur physique directement ou indirectement liée à la courbure de l'enveloppe pneumatique située au droit du capteur dans la direction circonférentielle de l'enveloppe pneumatique. Le capteur est équipé de tous les composants nécessaires pour générer un signal exploitable par un système externe de façon analogique ou digitale avec une discrétisation spatiale ou temporelle suffisante pour générer un signal de sortie s'apparentant à un signal de type créneau. C'est un signal dont l'abscisse est un descripteur direct ou indirect du tour de roue et l'ordonnée est un descripteur direct ou indirect de la courbure circonférentielle observée par le capteur. Ce capteur peut être un capteur de flexion de type résistif, un capteur piézoélectrique sensible à la flexion, un accéléromètre dont la composante continue est proportionnelle à l'accélération radiale de l'enveloppe pneumatique ou tout autre capteur fondé sur une mesure mécanique, électrique, magnétique ou optique délivrant une composante continue proportionnelle à la courbure circonférentielle de l'enveloppe pneumatique.
On entend ici par le teme « équipée » que au moins une partie du capteur est liée à l'enveloppe pneumatique. Et on entend ici par le terme « capteur » , le dispositif de mesure comprenant à la fois le capteur actif proprement dit et les composants additionnels pour générer un signal exploitable.
On entend ici par le terme « capteur optique », tout dispositif de l'état de la technique permettant d'obtenir le cloquage de la surface de l'enveloppe pneumatique lors de la traversée de l'aire de contact par une mesure optique . En particulier en terme de capteur optique, le document EP1820670A1 décrit une solution comprenant d'une part un motif étalonné assujetti à la déformation d'une surface de l'enveloppe pneumatique, par exemple une partie de l'aire de contact. Et d'autre part, le dispositif de mesure comprend des moyens d'éclairage, couplés à des moyens de vision, montés sur la jante de la roue de l'ensemble monté à une certaine position azimutale. Ici, à titre d'exemple, ces moyens d'éclairage et de vision sont de type stéréovision. Ce dispositif permet d'obtenir une visualisation du cloquage de la surface de l'enveloppe pneumatique lors de la traversée par le motif étalonné de l'aire de contact. L'étalonnage du motif permet d'en déduire la courbure circonférentielle de la surface du pneumatique au niveau du motif étalonné situé par exemple dans l'aire de contact.
On entend ici par le terme « rigidité radiale de l'ensemble monté », la rigidité dynamique de l'ensemble monté générée par un déplacement radial imposé au niveau de la surface externe du sommet dans le domaine élastique des déplacements observés par une enveloppe pneumatique en condition nominale d'usage. Ces conditions fixent en particulier la charge imposée et la pression de gonflage. Cette rigidité dynamique est le rapport entre la force verticale observée au centre roue de l'ensemble monté et le déplacement vertical imposé du sommet de l'enveloppe pneumatique au niveau de l'aire de contact dans la gamme de fréquence entre 5 et 50 Hz pour laquelle l'ensemble monté se comporte comme un ressort unidirectionnel ce qui correspond à une mesure éloignée des modes propres de l'ensemble monté.
Le type de capteur employé permet d'observer la courbure de l'enveloppe pneumatique qui se développera au moment où le capteur est situé entièrement dans l'aire de contact. Ce capteur ne désire pas détecter les variations de courbure au niveau des zones de transition de l'enveloppe passant d'un état de type contact avec le sol à un état de type hors contact avec le sol. Il cherche juste à identifier la courbure résultante de l'enveloppe pneumatique lorsque la zone de l'enveloppe pneumatique au droit du capteur se trouve dans l'aire de contact.
Les signaux du capteur s'apparentent à un signal de type créneau dans lequel on extrait par des moyens mathématiques adaptés la valeur représentative du plateau du créneau. Cette valeur représentative du plateau est l'image de la courbure moyenne de l'enveloppe pneumatique dans l'aire de contact. Les fronts isolés du créneau correspondent à la mesure par le capteur de la courbure de l'enveloppe pneumatique dans la zone de transition entre les deux états de régime permanent en matière de conditions aux limites appliquées à la zone de l'ensemble monté situé au droit du capteur.

Il est possible d'évaluer relativement à la rigidité radiale de l'ensemble monté, la fermeté du sol à l'aide de la valeur de courbure $\rho_A$ de l'enveloppe pneumatique. En effet cette grandeur de courbure est fonction à la fois de la rigidité radiale de l'enveloppe pneumatique en particulier la pression de gonflage et la charge appliquée mais aussi de la rigidité du sol. Cette fermeté du sol relative est décisive pour évaluer l'impact de l'ensemble monté sur le sol sur lequel l'ensemble monté se déplace. La détermination de cette grandeur permet d'optimiser au besoin les conditions d'usage de l'ensemble monté pour améliorer les fonctions de mobilité de l'ensemble monté et minimiser l'influence de l'ensemble monté sur le sol.

Selon un mode de réalisation préférentielle, la méthode d'évaluation de la fermeté d'un sol comprend aussi les étapes suivantes :

- Estimer une valeur de courbure $\rho_B$ de l'enveloppe pneumatique correspondant à un second régime permanent de l'enveloppe pneumatique hors du contact avec le sol ;

- Evaluer la fermeté relative du sol par rapport à la rigidité radiale $k_{radial}$ de l'ensemble monté comme une fonction de la valeur de courbure $\rho_A$ dans le premier régime permanent et de la valeur de courbure $\rho_B$ de l'enveloppe pneumatique dans le second régime permanent.

Selon que la mesure est prise lorsque le capteur sensible à la courbure se trouve soit au niveau du contact avec le sol ou soit en dehors de ce contact, on obtient deux valeurs distinctes que l'on nomme courbure de l'enveloppe pneumatique en contact avec le sol $\rho_A$ ou courbure de l'enveloppe pneumatique en dehors du contact avec le sol $\rho_B$. Ces valeurs de courbure en régime permanent correspondent aux zones de plateau du signal créneau généré par le capteur sensible à la courbure circonférentielle.

Bien entendu, les valeurs de courbure dépendent des conditions d'usage de l'enveloppe pneumatique. En particulier, ces valeurs sont fonction de la pression de gonflage, de la charge portée et de la vitesse de rotation de l'enveloppe pneumatique. De plus, la valeur de courbure en régime permanent de type contact avec le sol est aussi sensible à la rigidité du sol. Ainsi le différentiel entre les deux valeurs de courbure permet de remonter à l'information souhaitée concernant la fermeté du sol.

Selon un mode de réalisation préférentielle, la méthode d'évaluation de la fermeté d'un sol comprend les étapes suivantes :

- Etablir la courbure relative C comme le rapport $\rho_A/\rho_B$ ;
- Evaluer la fermeté relative du sol par rapport à la rigidité radiale $k_{radial}$ de l'ensemble monté comme une fonction de la courbure relative C.

En particulier, le lien entre la fermeté relative du sol par rapport à la rigidité radiale $k_{radial}$ de l'ensemble monté peut être donné par la formule suivante :

$$\frac{k_{sol}}{k_{radial}} = \frac{\left|1+\alpha*C-(1+\alpha)*C^2\right|}{\beta*C},$$

dans laquelle $\beta$ est une fonction polynomiale de la pression de gonflage P de l'ensemble monté du type suivant : $\beta = \beta_1 * (P)^{\beta_2}$. Les coefficients $\alpha$, $\beta_1$ et $\beta_2$ sont des coefficients dépendants de l'ensemble monté.

On évalue la courbure relative d'un sol comme le rapport des images des courbures entre les deux créneaux en mettant au dénominateur celle qui correspond au régime permanent de type en dehors du contact avec le sol suivant la formule suivante :

$$C = \frac{\rho_A}{\rho_B}$$

Cette courbure relative est comprise entre 0 et 1. La valeur nulle de C correspond à une valeur de courbure nulle dans l'aire de contact ce qui s'apparente à un sol plan équivalent à une fermeté élevée du sol. Et la valeur unitaire de C correspond à une courbure identique dans et en dehors de l'aire de contact. Ceci se traduit par une absence d'aire de contact au tour de roue au sens d'une mise à plat de l'enveloppe pneumatique. Ainsi, le pneumatique a la même courbure en toute position angulaire du tour de roue et cela correspond à la valeur maximale de courbure dans les zones de régime permanent correspondant à l'enveloppe en contact avec le sol. Les valeurs intermédiaires correspondent à des courbures intermédiaires de l'enveloppe pneumatique dans les zones de régime permanent de type contact avec le sol.

On notera que les conditions d'usage de l'ensemble monté tel que, par exemple, la charge portée, la pression de gonflage ou la vitesse de rotation n'influencent que faiblement la courbure relative C de l'enveloppe pneumatique qui est principalement pilotée par la fermeté du sol.

On entend par l'expression « dépendants de l'ensemble monté » que la nature même des composants de l'ensemble monté telles qu'au moins l'enveloppe pneumatique ou la roue influence fortement par leurs caractéristiques dimensionnelles et matérielles. A contrario les conditions d'usage de l'ensemble monté telle que la pression de gonflage, la charge appliquée ou la vitesse de rotation sont des paramètres faiblement dépendants.

La fermeté relative du sol par rapport à la rigidité radiale de l'ensemble monté est alors directement définie par la formule suivante où $\alpha$, $\beta1$ et $\beta2$ sont des coefficients dépendants de l'ensemble monté et P est la pression de gonflage de l'ensemble monté :

$$\frac{k_{sol}}{k_{radial}} = \frac{|1 + \alpha * C - (1 + \alpha) * C^2|}{\beta_1 * P^{\beta_2} * C}$$

De plus, la connaissance de la rigidité radiale de l'ensemble monté permet de déterminer une valeur absolue de la fermeté du sol. Cette seconde grandeur est une donnée agronome importante pour qualifier le sol et optimiser son exploitation.

Lorsque le sol s'apparente à une route asphaltée de fermeté élevée, la valeur de courbure relative C tend vers 0. De ce fait la fermeté du sol devient importante par rapport à la rigidité radiale de l'ensemble monté. De même lorsque le sol est de faible fermeté, la valeur de courbure relative tend vers 1. La fermeté relative du sol par rapport à la rigidité radiale de l'ensemble monté tend vers 0.

De plus, si on mesure la fermeté relative d'un même sol par deux ensembles montés différents, ceci va se traduire par deux grandeurs de courbure relative associées chacune à l'un des ensembles montés. Si on emploie comme variation d'ensemble monté, une simple variation de pression de gonflage du même ensemble monté, alors le rapport des rigidités dynamiques entre les ensembles montés référencés 1 et 2 est donnée par l'équation suivante d'une part par le modèle et d'autre part par l'évolution standard de la rigidité d'un ensemble monté avec la pression de gonflage :

$$\frac{k_{radial}^1}{k_{radial}^2} = \left( \frac{\left[ (1 + \alpha * C_2 - (1 + \alpha) * C_2^2) * \left( \beta_1 * P_1^{\beta_2} * C_1 \right) \right]}{\left[ (1 + \alpha * C_1 - (1 + \alpha) * C_1^2) * \left( \beta_1 * P_2^{\beta_2} * C_2 \right) \right]} \right) = \left( \frac{P_1}{P_2} \right)^\gamma$$

Ainsi, l'identification du comportement de la rigidité d'un ensemble monté avec la pression de gonflage sur un sol plan couplée à des mesures sur des sols meubles différents permet d'évaluer le coefficient $\beta_2$ du modèle.

De plus, si on mesure la fermeté relative de deux sols différents référencés 1 et 2 par le même ensemble monté ce qui suppose la même pression de gonflage, ceci va se traduire par deux grandeurs de courbure relative associée chacune à l'une des pressions. Le rapport des fermetés des sols référencés 1 et 2 est donné par l'équation suivante :

$$\frac{k_{sol}^1}{k_{sol}^2} = \left( \frac{\left[ (1 + \alpha * C_1 - (1 + \alpha) * C_1^2) * \left( \beta_1 * P^{\beta_2} * C_2 \right) \right]}{\left[ (1 + \alpha * C_2 - (1 + \alpha) * C_2^2) * \left( \beta_1 * P^{\beta_2} * C_1 \right) \right]} \right) = \left( \frac{(1 + \alpha * C_1 - (1 + \alpha) * C_1^2) * C_2}{(1 + \alpha * C_2 - (1 + \alpha) * C_2^2) * C_1} \right)$$

Ainsi la simple calibration de l'ensemble monté à iso pression de gonflage sur des sols de fermeté connue permet d'identifier le paramètre $\alpha$ du modèle.

Selon un mode avantageux de réalisation, l'enveloppe pneumatique définissant une aire de contact, par application des conditions nominales d'usage de l'ensemble monté, cette aire de contact présentant une dimension Ladc selon la direction axiale de l'ensemble monté, le capteur mesure la courbure circonférentielle moyenne sur une longueur comprise entre 10% et 80% de la dimension Ladc.

On entend ici par l'expression « conditions nominales d'usage d'une enveloppe pneumatique », les conditions normatives de l'enveloppe pneumatique selon la norme ETRTO afin de définir la boite géométrique de l'enveloppe pneumatique. Les conditions nominales concernent la charge portée, la pression de gonflage ainsi que les dimensions et les caractéristiques de la roue sur laquelle l'enveloppe pneumatique est montée. Pour une enveloppe pneumatique donnée, ces conditions spécifient une aire de contact sur sol plan rigide dont une longueur maximale Ladc d'aire de contact.

Si le capteur est au moins linéique et non ponctuel, la mesure effectuée par le capteur correspond à la courbure moyenne de l'enveloppe pneumatique sur la longueur du capteur. Ce type de capteur est beaucoup moins sensible aux irrégularités de rigidité provenant du sol ou de l'enveloppe pneumatique ou de l'ensemble monté. Il fournit donc une information statistiquement plus fiable de la fermeté d'un sol sous une forme homogénéisée et directe. De plus, ce type de capteur génère une plus grande dynamique dans la mesure de courbure entre les régimes permanents correspondant à la rotation libre ou au contact avec le sol. Cette dynamique de mesure permet d'évaluer avec plus de finesse la fermeté d'un sol. En général, plus le capteur est de grande dimension, meilleure sera la dynamique de mesure et la précision de la valeur homogénéisée de la fermeté d'un sol. Nécessairement, afin d'obtenir un signal émis par le capteur qui soit exploitable par la méthode, il est nécessaire que la longueur du capteur soit inférieure à la longueur de l'aire de contact dans les conditions de mesure du sol.

Selon un autre mode avantageux de réalisation, l'enveloppe pneumatique définissant une aire de contact, cette aire de contact présentant une dimension ladc selon la direction transversale de l'ensemble monté, le capteur mesure la courbure circonférentielle moyenne sur une largeur comprise entre 10% et 80% de la dimension ladc.

Si le capteur est au moins surfacique et non linéique, que le capteur soit unique ou une combinaison de capteurs disposés transversalement, la mesure effectuée par le capteur correspond à la courbure moyenne de l'enveloppe pneumatique sur la longueur et la largeur du capteur. Ce type de capteur est beaucoup moins sensible aux irrégularités de rigidité provenant du sol ou de l'enveloppe pneumatique ou de l'ensemble monté. Il fournit donc une information statistiquement plus fiable de la fermeté d'un sol sous une forme homogénéisée et directe. Nécessairement, afin d'obtenir un signal émis par le capteur qui soit exploitable par la méthode, il est nécessaire que la largeur du capteur soit inférieure à la largeur de l'aire de contact dans les conditions de mesure du sol.

Préférentiellement, le capteur mesure la courbure moyenne d'une zone du sommet de l'enveloppe pneumatique en contact avec le sol homogène en matière de rigidité radiale.

Dans une logique de qualité de l'information de mesure, il est utile que le capteur soit positionné au droit d'une zone homogène du sommet de l'enveloppe pneumatique. Or, le sommet d'une enveloppe pneumatique est une zone complexe en raison des diverses fonctions qu'il doit assurer. En particulier, pour améliorer le contact entre la gomme et le sol, le sommet comprend notamment une bande de roulement qui est l'élément en contact direct avec le sol. Cette bande de roulement est souvent constituée par des enchainements longitudinaux et/ou transversaux de creux et de sculptures en saillie modifiant localement la rigidité radiale de l'enveloppe pneumatique. Il convient donc de positionner le capteur au droit d'une zone homogène en matière de rigidité et notamment de rigidité radiale.

Préférentiellement le capteur mesure la courbure moyenne d'une zone du sommet au droit d'un élément de sculpture de la bande de roulement de l'enveloppe pneumatique.

Dans une même logique de qualité de l'information de mesure, il est préférable que le capteur soit positionné au droit d'un élément de sculpture de la bande de roulement. Ainsi, on s'assure d'une homogénéité de la rigidité radiale de l'enveloppe pneumatique et donc de l'ensemble monté. De plus, la sculpture est un élément de la bande de roulement en saillie qui est directement en contact avec le sol. Les autres éléments de la bande de roulement, comme les creux par exemple, bien qu'interagissant aussi avec le sol, sont aussi influencés par les autres parties de la bande de roulement comme les éléments en saillie. Par conséquent, la mesure obtenue lorsque le capteur est au droit d'un élément de sculpture de la bande de roulement a donc plus de dynamique rendant plus précise la qualification intrinsèque du sol.

Selon un mode de réalisation préférentielle, l'estimation des valeurs de courbure correspondant aux premier et second régimes permanents en matière de conditions aux limites de l'enveloppe pneumatique comprend les étapes suivantes :

- Obtenir un signal enregistré du capteur sensible à la courbure correspondant à N tours de roue de l'ensemble monté, étant un entier supérieure à 1 ;

- Identifier sur le signal enregistré les 2N maximums locaux $Y_{2N}$, et leur abscisses correspondantes $X_{2N}$ ;

- Pour tout j, j étant un entier strictement supérieur à 1 et strictement inférieur 2N:

- Si $(X_j - X_{j-1}) < (X_{j+1} - X_j)$,

  ∘ Isoler un premier signal sur le signal enregistré entre le maxima central $(X_j, Y_j)$ et le maxima précédent $(X_{j-1}, Y_{j-1})$ ;

  ∘ Identifier la valeur de courbure en régime permanent nommé $\rho_j$ sur le premier signal;

  ∘ Isoler un second signal sur le signal enregistré entre le maxima central $(X_j, Y_j)$ et le maxima suivant $(X_{j+1}, Y_{j+1})$ ;

EP 3 681 739 B1

∘ Identifier la valeur de courbure en régime permanent nommé $\rho_{j+1}$ sur le au moins un second signal;

- Sinon,

∘ Isoler un premier signal sur le signal enregistré entre le maxima central $(X_j, Y_j)$ et le maxima suivant $(X_{j+1}, Y_{j+1})$ ;

∘ Identifier la valeur de courbure en régime permanent nommé $\rho_j$ sur le au moins un premier signal;

∘ Isoler un second signal sur le signal enregistré entre le maxima central $(X_j, Y_j)$ et le maxima précédent $(X_{j-1}, Y_{j-1})$ ; et

∘ Identifier la valeur de courbure en régime permanent nommé $\rho_{j+1}$ sur le au moins un second signal ; et

- Etablir la courbure de pneumatique en condition de contact avec le sol $\rho_A$ comme étant la moyenne des au moins une valeur de courbure $\rho_j$ et la courbure de l'enveloppe pneumatique en condition hors contact avec le sol $\rho_B$ comme étant la moyenne des au moins une valeur de courbure $\rho_{j+1}$;

Cette méthode pour obtenir une évaluation des courbures de l'ensemble monté dans ces régimes permanents en matière de conditions aux limites appliquées à l'enveloppe pneumatique repose sur la génération d'un signal émis par le capteur de type multi créneaux au tour de roue.
On isole un premier signal émis par le capteur correspondant à un nombre fini N de tours de roue. La détection de la rotation de l'ensemble monté est effectuée à l'aide d'un capteur disponible dans l'état de la technique intégré à l'enveloppe pneumatique, l'ensemble monté ou le véhicule comme par exemple un top tour ou un codeur.
Sur ce signal émis, il suffit d'identifier la valeur de courbure correspondant aux régimes permanents en employant des moyens de traitement du signal pour extraire l'information utile du signal.
Ce signal émis est préalablement isolé en signaux élémentaires de type simple créneau pour simplifier l'identification de la valeur de courbure de chaque régime permanent. Le découpage est réalisé en isolant le signal entre deux maxima locaux du signal. Chaque maxima local correspond à une zone de transition d'un premier régime permanent à un second régime permanent.
Ensuite, une simple analyse quantitative de l'intervalle des ordonnées des signaux entre les maxima locaux permet directement d'identifier le régime permanent de type contact au sol du régime permanent de type rotation libre. En effet, le secteur angulaire de l'aire de contact d'une enveloppe pneumatique est nécessairement plus étroit que le secteur angulaire de l'enveloppe pneumatique située en dehors de l'aire de contact du fait de la géométrie circulaire d'un ensemble monté.
Enfin une moyenne des valeurs de courbure par régime permanent de conditions aux limites appliquées à l'ensemble monté est réalisée. Ceci permet de rendre robuste statistiquement la valeur de courbure par régime permanent. Cette opération est d'une importance plus élevée sur le régime permanent de type contact au sol où les irrégularités provenant principalement du sol mais aussi de l'ensemble monté peuvent créer naturellement de la dispersion dans l'évaluation de la courbure.
Préférentiellement, l'obtention du signal enregistré du capteur sensible à la courbure correspondant à N tours de roue de l'ensemble monté comprend les étapes suivantes :

- Enregistrer un signal émis par le capteur sensible à la courbure correspondant à un tour de roue de l'ensemble monté ;

- Périodiser le signal émis sur N périodes, N étant un entier supérieur à 1 ;

Afin de ménager l'espace mémoire associé au capteur, il est seulement utile d'extraire les signaux du capteur sur un tour de roue correspondant par exemple à un intervalle temporel delta T, fonction de la vitesse de rotation de l'ensemble monté. Ensuite, le signal enregistré correspondant à N tours de roue est obtenu en périodisant le signal émis par le capteur sur un seul tour de roue.
Cette méthode est particulièrement bien adaptée pour un échantillonnage d'un sol dont les caractéristiques ont déjà été relevées. De plus, si les caractéristiques passées du sol d'une parcelle ont mis en évidence une certaine homogénéité spatiale du sol, une mesure ponctuelle suffit au suivi temporel d'une parcelle de sol.
Selon un autre mode de réalisation particulier le capteur sortant une grandeur indirecte de la courbure circonférentielle de l'enveloppe pneumatique faisant intervenir un paramètre variable, la méthode comprend une étape supplémentaire

- Corriger la grandeur indirecte sur le signal enregistré à l'aide du paramètre variable

EP 3 681 739 B1

Dans le cas où la grandeur de sortie du capteur est influencée par des paramètres qui évoluent au cours du tour de roue et au cours du temps au moment de la prise de mesure comme par exemple la vitesse angulaire de l'ensemble monté ou la température, il faut prendre en compte ces variations. De même si la réponse du capteur n'est pas linéaire à la sollicitation appliquée, il faut prendre en compte la courbe de calibration du capteur. Ainsi, il est possible de corriger le signal enregistré par le capteur, comme par exemple l'accélération radiale dans le cas d'un accéléromètre dépendant à la fois de la courbure et de la vitesse de déplacement de l'ensemble monté, en intégrant les effets de la variation de ces paramètres dans le signal enregistré. Tout d'abord, il faut évaluer de façon simultanée au signal enregistré par le capteur sensible à la courbure circonférentielle les mesures des paramètres variables à l'aide si nécessaire de dispositifs supplémentaires. Ces dispositifs supplémentaires sont à la fois des dispositifs de mesure et des dispositifs de synchronisation de l'ensemble des signaux de mesure.

Ensuite, il faut à l'aide de ces mesures supplémentaires venir intégrer les variations de ces paramètres dans la grandeur de sortie du capteur sensible à la courbure. Le nouveau signal enregistré est ainsi nettoyé des fluctuations parasites. On réalise ainsi un capteur mesurant directement la courbure circonférentielle. La forme des nouveaux signaux est caractéristique de ce que l'on attend, un signal multi-créneaux. Le traitement du signal effectué dans la méthode générale est alors applicable.

Selon un mode de réalisation très préférentiel, la courbure de l'enveloppe pneumatique en condition de contact avec le sol $\rho_j$ est évaluée sur un signal réduit du premier signal.

La condition sur la longueur des intervalles permet d'isoler sur le signal enregistré le créneau correspondant au régime permanent de contact avec le sol. Ensuite, sur ce créneau qui comprend des premier et second fronts isolés représentant le passage du capteur entre un premier régime permanent hors contact avec le sol à un régime permanant de contact avec le sol puis à un second passage en sens inverse entre les régimes permanents, on le restreint volontairement à une portion du signal qui représente la condition que l'on cherche à analyser. En effet, des interactions entre l'ensemble monté et le sol peuvent modifier la rigidité locale du sol ce qui correspond à une opération de compactage du sol. La visualisation de la compaction du sol s'observe par la valeur du plateau du créneau du premier signal. Celui-ci évolue au fur et à mesure de la traversée du capteur dans l'aire de contact. Selon l'information que l'on recherche, il peut être intéressant de restreindre la mesure à certaines zones de l'aire de contact.

Selon un mode de réalisation particulier, le signal réduit du premier signal est défini comme étant la première moitié du premier signal.

La première partie de l'aire de contact de l'enveloppe pneumatique se trouve en vis-à-vis d'un sol n'ayant subi qu'une faible influence de l'ensemble monté. De ce fait, la valeur de courbure de l'enveloppe pneumatique identifiée permet d'obtenir une évaluation de la valeur de fermeté relative du sol qui est une donnée intrinsèque au sol non influencée par le passage de l'ensemble monté sur ce sol. En réduisant le premier signal correspondant à la traversée du capteur dans l'aire de contact à la première moitié du premier signal on focalise ainsi l'analyse sur cette grandeur intrinsèque du sol dit non roulé.

Selon un autre mode de réalisation particulier, le signal réduit du premier signal est défini comme étant la seconde moitié du premier signal.

La seconde partie de l'aire de contact de l'enveloppe pneumatique se trouve en vis-à-vis d'un sol dit roulé ayant subi l'influence de l'enveloppe pneumatique. De ce fait, la valeur de courbure de l'enveloppe pneumatique identifiée permet d'obtenir une évaluation de la valeur de fermeté relative du sol roulé qui a subi le passage de l'ensemble monté. Cette donnée est une grandeur intéressante puisque celui-ci correspond à l'état du sol après le passage de l'ensemble monté. C'est donc une caractéristique du sol résultant de l'action de l'ensemble monté et du véhicule.

Selon un mode de réalisation très particulier, l'identification des valeurs de courbure en régime permanent nommé $\rho_j$ comprend l'étape suivante :

- Symétriser le signal réduit sur un intervalle correspondant au signal réduit pour obtenir un nouveau signal en forme de créneau.

Cette méthode permet de générer un signal de type créneau. Ainsi il est possible d'employer les mêmes méthodes d'identification des valeurs de courbure que celles employées dans le cas où l'analyse se focalise sur la totalité de la traversée de l'aire de contact par le capteur.

## Description brève des dessins

L'invention sera mieux comprise à la lecture de la description qui va suivre donnée uniquement à titre d'exemple et faite en se référant aux figures annexées dans lesquelles les mêmes numéros de référence désignent partout des parties identiques et dans lesquelles ::

- La figure 1 présente un synoptique des étapes de la méthode d'évaluation de la fermeté d'un sol selon l'invention ;

- La figure 2 présente les signaux enregistrés par deux capteurs sensibles à la courbure circonférentielle placés soit au droit d'une sculpture selon l'invention, soit dans l'espace entre deux sculptures ;
- Les figures 3a et 3b présentent les étapes de traitement d'un signal sortant une grandeur directe de courbure circonférentielle.

## Description détaillée de modes de réalisation

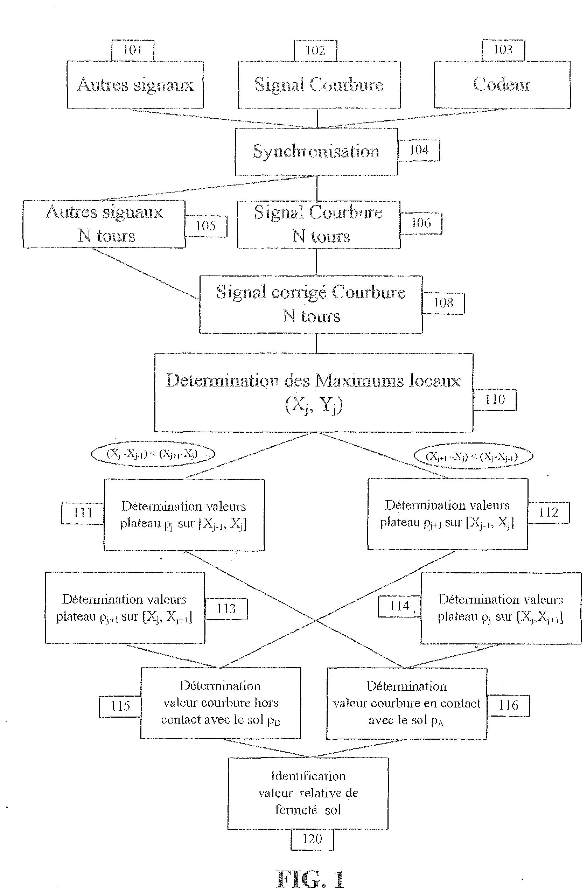

Sur la figure 1, on distingue un synoptique des diverses étapes obligatoires et optionnelles concernant la méthode d'évaluation de la fermeté d'un sol. Le point de départ réside dans un signal 102 émis par un capteur sensible à la courbure circonférentielle. La discrétisation spatiale de ce signal doit être suffisante pour décrire convenablement le passage dans l'aire de contact. Un minimum de six points de mesure dans l'aire de contact est nécessaire. Ce signal peut être une mesure directe de la courbure circonférentielle via un capteur de flexion ou une mesure indirecte via, par exemple, un accéléromètre monoaxe disposé radialement à l'enveloppe pneumatique ou bien un capteur piézoélectrique dont la direction principale est positionnée ciconférentiellement à l'enveloppe pneumatique.

Ce signal peut être complété par d'autres signaux 101 et 103 utiles à l'exploitation du signal 102 de courbure. En particulier, dans le cas où le signal 102 de courbure est influencé par des paramètres variables, il faut, afin de corriger le signal 102 de courbure, enregistrer aussi la variation de ces paramètres variables. De plus, il faut aussi un signal 103 de type codeur ou un top tour pour isoler la réponse des signaux sur le tour de roue de l'ensemble monté. Bien entendu, la synchronisation 104 de l'ensemble de ces signaux est un préalable à toute méthode de traitement de l'information. A la fin de ce premier processus, la méthode génère des signaux de courbure 108 correspondant à un nombre fini N de tours de roue qui ont été au besoin corrigés des fluctuations des paramètres variables.

Le second processus consiste à déterminer les valeurs représentatives de la courbure circonférentielle dans chacun des régimes permanents de l'ensemble monté. On entend ici par le terme « régime permanent », que les conditions aux limites appliquées sur la zone du sommet de l'enveloppe pneumatique située au droit du capteur sont identiques, c'est-à-dire soit en contact avec le sol soit hors contact avec le sol.

A cet effet, on profitera des fortes variations de courbure à l'entrée et la sortie de l'aire de contact pour distinguer sur le signal du capteur sensible à la courbure les zones de régime permanent. Ainsi, il est facile de déterminer des maximas locaux 110 sur le signal de courbure 108 correspondant à un nombre fini de tours de roue. La comparaison deux à deux des ordonnées de ces maximas locaux permet de facilement identifier les parties du signal 108 correspondant à l'un ou l'autre des régimes permanents. En effet la taille de l'aire de contact est forcément petite à l'échelle du périmètre de l'ensemble monté en raison de la forme toroïdale de l'enveloppe pneumatique. Ainsi la comparaison des distances entre les ordonnées des maximas locaux précédant et suivant indique clairement les zones de l'enveloppe pneumatique en contact ou hors contact avec le sol.

Le signal de courbure 108 correspondant à chacune de ces zones délimitées par les maximas locaux s'apparente à un créneau présentant deux fronts de forte variation de courbure séparés par un plateau ayant un niveau de courbure quasi constant. Les fronts isolés correspondent aux zones de transition entre les zones de régime permanent. Le plateau correspond à la zone stable en terme de conditions aux limites appliquées au sommet de l'enveloppe pneumatique où se localise le capteur de mesure. C'est cette partie du signal qui sera par la suite exploitée.

Pour chacune de ces parties du signal on déterminera une valeur représentative de courbure associée à l'ensemble monté. La détermination de cette valeur représentative s'effectue par des méthodes mathématiques de type valeur minimale, valeur médiane, méthode des moindres carrés ou tout autre algorithme. La première valeur représentative 111 ou 113 nommée $\rho_j$ correspond à la courbure moyenne en régime permanent de conditions aux limites de type contact avec le sol. La seconde valeur représentative 112 ou 114 nommée $\rho_{j+1}$ désigne la courbure moyenne en régime permanent en dehors du contact avec le sol. Enfin, en moyennant les valeurs représentatives pour chacun des régimes permanents sur l'ensemble du signal de courbure 108, on évalue d'une part une valeur de courbure de l'enveloppe pneumatique en condition de type hors contact avec le sol 115 nommée $\rho_B$ et d'autre part une valeur de courbure de l'enveloppe pneumatique de type en contact avec le sol 116 nommée $\rho_A$.

Le dernier processus consiste à évaluer la fermeté relative du sol 120 par rapport à la rigidité radiale de l'ensemble monté à partir des valeurs de courbure de l'ensemble monté 115 et 116 pris individuellement ou en combinaison. Si la grandeur liée à la courbure circonférentielle 116 en régime permanent de type contact avec le sol $\rho_A$ prenant en compte la rigidité du sol est la plus pertinente, la prise en compte de la courbure circonférentielle 115 hors contact avec le sol $\rho_B$ améliore de façon quantitative la détermination de la fermeté du sol.

De façon optionnelle, il est possible d'évaluer la fermeté du sol lors de la pénétration de l'enveloppe pneumatique dans le sol en se focalisant sur la première moitié du plateau du signal créneau dans le sens d'avancement de l'ensemble monté. Cette mesure est une donnée intrinsèque du sol. Il est aussi possible de mesurer la fermeté du sol sur la seconde moitié de l'aire de contact donnant accès à la fermeté du sol ayant été éventuellement modifié par le passage de l'ensemble monté. L'écart entre ces deux caractéristiques distinctives de fermeté d'un sol permet de remonter à une grandeur s'apparentant à la compaction de sol après le passage de l'ensemble monté.

**EP 3 681 739 B1**

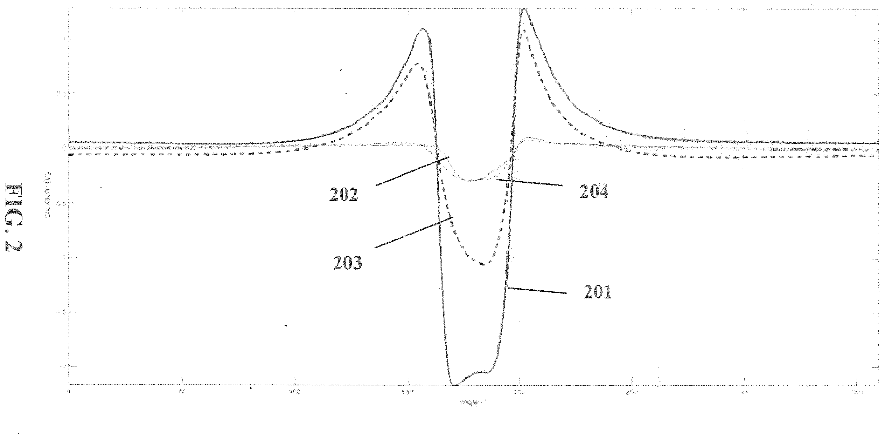

La figure 2 comporte les réponses de capteurs sensibles à la courbure circonférentielle de type piézoélectrique lorsque ceux-ci sont installés sur une enveloppe pneumatique de marque Michelin Multibib en dimension 650/60 R38 lors de roulage sur un tracteur Fendt Turbomatik Favorit 614 LSA. Cette enveloppe pneumatique présente deux séries de barrettes positionnées sur les parties latérales de la bande de roulement en décalage angulaire l'une par rapport à l'autre. En effet, chaque barrette part du centre du sommet et s'étend dans une direction faisant un angle d'environ 30 degrés alternativement dans le sens horaire et antihoraire par rapport à l'axe X vers l'extérieur.

Un premier capteur piézoélectrique est positionné sur la gomme intérieure de l'enveloppe pneumatique en ayant la partie active du capteur fixée au droit d'une barrette. Afin d'optimiser la réponse du signal, ce capteur est situé le plus près du milieu de la bande de roulement. Un second capteur est positionné au droit d'une zone inter barrette, c'est-à-dire entre deux barrettes. Ce capteur est aussi centré au mieux par rapport à la largeur du sommet.

L'ensemble monté va rouler sur deux sols de fermetés différentes. Le premier sol est une route bituminée de rigidité élevée. Le second sol est un champ agricole sans culture et sans labourage depuis plusieurs jours. Ainsi la déformation subie par l'enveloppe pneumatique entre les deux zones est différente, et on attend que le capteur sensible à la courbure circonférentielle puisse restituer ces phénomènes.

L'ensemble monté est gonflé à la pression de 1,6 bars et le tracteur roule à une vitesse constante de 10 km/h aussi bien sur la route que dans le champ agricole.

Les courbes en gras 201 et 203 représentent la réponse du premier capteur piézoélectrique dont la partie active se trouve au droit d'une barrette de la bande de roulement. Les courbes en trait fin 202 et 204 sont les réponses du second capteur situé dans la zone inter barrette. Les courbes en trait continu 201 et 202 correspondent au roulage sur la route, tandis que les courbes en pointillé 203 et 204 correspondent au roulage dans le champ agricole.

Les signaux observés sont la moyenne sur 10 tours de roue des sorties brutes du capteur piézoélectrique en volts sur un tour de roue complet. L'origine des angles est située suivant la direction verticale, selon les Z positifs dans le repère galiléen. La forte évolution située aux alentours de 180 degrés correspond à la réponse du capteur lors de son passage dans l'aire de contact.

On observe assez nettement que la réponse du premier capteur est correcte par rapport à ce que l'on attend. On visualise en outre une forte évolution de sa réponse, comparaison des plateaux du créneau des courbes 201 et 203 correspondant au passage dans l'aire de contact, qui est proportionnelle à la rigidité du sol et donc à la courbure de l'enveloppe pneumatique.

En revanche, la réponse du second capteur n'est pas suffisamment discriminante. Tout d'abord l'amplitude de la réponse du second capteur est nettement plus faible que celle du premier capteur en particulier au niveau du plateau du créneau, comparaison des courbes 202 et 201 ou 203 et 204 De plus, l'amplitude de la réponse du second capteur est similaire et ce quelle que soit la nature du sol, comparaison des courbes 202 et 204. De ce fait, il s'avère bien que le positionnement du capteur au droit d'un élément de sculpture en contact avec le sol soit un préalable à une évaluation de qualité de la fermeté d'un sol.

Ainsi le capteur sensible à la courbure circonférentielle de l'enveloppe pneumatique permet à iso condition d'usage de l'ensemble monté, c'est-à-dire la même pression de gonflage, la même chargé appliquée et la même vitesse de roulage, de qualifier relativement les sols selon leur fermeté.

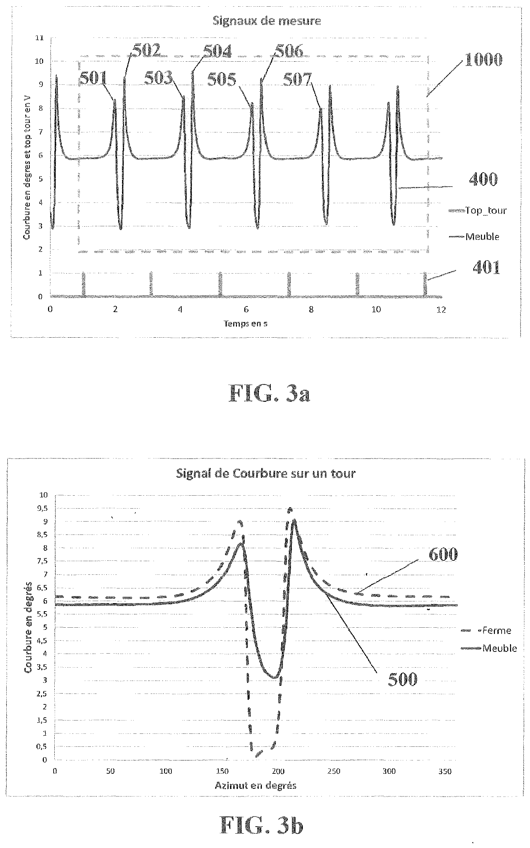

La figure 3a montre d'une part l'enregistrement temporel d'un signal électrique émis par le capteur sensible à la courbure circonférentielle noté 400 et d'autre part un codeur top tour noté 401. Les signaux sont synchronisés et discrétisés à une fréquence d'échantillonnage de 2400Hz.

Le capteur de courbure, de type piézoélectrique est implanté sur une enveloppe pneumatique de marque Michelin Multibib en dimension 650/60 R38 lors de roulage sur un tracteur Fendt Turbomatik Favorit 614 LSA. Le tracteur roule sur un sol d'une certaine rigidité à une vitesse constante de 10 km/h. L'ensemble monté est ici gonflé à une pression de 1,6 bars. Une conversion de la tension de sortie du capteur en courbure est fournie. Il aurait été possible d'employer aussi le signal de sortie d'un accéléromètre positionné au droit de la sculpture de la bande de roulement délivrant l'accélération radiale de l'enveloppe pneumatique qui aurait été filtré basse fréquence et corrigé par la vitesse de rotation de l'ensemble monté. Cette vitesse de rotation est déterminée, par exemple, à l'aide du top tour de roue.

A l'aide d'un top tour monté sur l'essieu du tracteur comprenant l'enveloppe à mesurer générant des impulsions de Dirac à chaque tour de roue, on va extraire un signal enregistré correspondant à 5 tours de roue. Ce signal enregistré est celui contenu dans le cadre 1000 en pointillé.

On observe que ce signal enregistré contient 10 maximums locaux notés à partir de 501, soit deux par tour de roue. Ces maximums locaux correspondent au moment où le capteur sensible à la courbure circonférentielle entre ou sort de l'aire de contact. L'écart spatial entre deux maximums locaux voisins diffère grandement. Ainsi en prenant un maximum locaux 506, les maximas locaux précédent 505 et suivant 507 sont respectivement proche et éloigné du maximum 506. La longueur circonférentielle de l'enveloppe pneumatique dans l'aire de contact étant nettement plus petite que la longueur circonférentielle restante de l'enveloppe pneumatique. Il est évident que le maximum 505 correspond à l'entrée dans l'aire de contact, le maximum 506 la sortie de l'aire de contact pour le même tour de roue. Enfin le maximum 507 est l'entrée dans l'aire de contact du prochain tour de roue.

Il est ainsi possible d'identifier facilement sur la courbe 400, les zones de réponse où le capteur est dans l'aire de contact ou en dehors de l'aire de contact. On remarque une certaine stabilité de la réponse du capteur quelle que soit la position géographique de l'ensemble monté dans le champ. La discrétisation spatiale de la mesure est d'environ cinq mètres. Ceci nous autorise de moyenner les réponses du capteur sur plusieurs tours de roue. Dans le cas contraire, une analyse tour de roue par tour de roue est nécessaire. En couplant l'information tour de roue avec la position géographique du tracteur dans le champ par l'intermédiaire par exemple d'un GPS ( acronyme en anglais de « Global Positioning System »), il est possible d'obtenir une cartographie de la rigidité d'une surface donnée avec une discrétisation spatiale plus ou moins fine en multipliant par exemple les mesures de fermeté de sol. Cette multitude de mesures peut être formée par exemple par un quadrillage effectué à l'aide du déplacement du tracteur.

La figure 3b contient les moyennes sur 5 tours de roue des réponses du capteur de courbure monté sur l'enveloppe pneumatique roulant soit sur un sol meuble 500 ou un sol ferme 600. Les conditions d'usage de l'enveloppe pneumatique, c'est-à-dire principalement la pression de gonflage, la charge appliquée et la vitesse de roulage sont identiques.

On remarque que la courbure de l'enveloppe pneumatique hors de la zone de contact est quasi constante avec une courbure d'environ six degrés. De façon cohérente, la courbure observée par l'enveloppe pneumatique hors de la zone de contact diminue si l'ensemble monté roule sur un sol meuble par rapport à celle obtenue sur un sol rigide.

Enfin, la courbure dans la zone de contact est fortement différente selon la nature des sols. Sur un sol ferme, la courbure est faible en raison de la mise à plat de l'enveloppe pneumatique. En revanche sur un sol meuble, on observe bien une chute de la courbure par rapport à la condition hors contact avec le sol mais la courbure résultante est encore de l'ordre dans ce cas de 50% de la courbure hors contact avec le sol.

Ici, l'algorithme employé pour l'évaluation de la courbure est la valeur médiane des points sur l'ensemble du plateau. Ainsi pour la courbe 500 correspondant au sol meuble on identifie une valeur de courbure en contact avec le sol $\rho_A$ de 3,2 degrés et une valeur de courbure hors contact avec le sol $\rho_B$ d'environ 5,9 degrés. De façon similaire, on identifie sur la courbe 600 de type ferme, une valeur de courbure en contact avec le sol $\rho_{A'}$ d'environ 0,5 degrés et d'une valeur de courbure hors contact avec le sol $\rho_{B'}$ d'environ 6,1 degrés.

On détermine une première valeur de courbure relative sur sol meuble notée C de l'ordre de 0,54 et une seconde valeur de courbure relative du sol ferme notée C' de l'ordre de 0,082.

Préalablement des mesures complémentaires ont été entreprises sur l'ensemble monté. Tout d'abord une campagne de simulation numérique pour identifier l'évolution de la rigidité verticale de l'ensemble monté en fonction de la pression de gonflage. Ainsi, pour des conditions nominales d'usage de l'ensemble monté en matière de pression et de charge appliquée, des simulations de rigidité verticale de l'ensemble monté ont été réalisées suite à un calcul d'écrasement sur sol glissant pour appliquer la charge. Il en ressort l'identification d'une loi puissance selon la pression de gonflage du type $(P)^\gamma$.

Puis, une calibration expérimentale du capteur sensible à la courbure circonférentielle de l'ensemble monté a été effectuée afin d'identifier le paramètre $\alpha$ du modèle. Ainsi, en ayant préalablement fixé une pression de gonflage de l'ensemble monté dans la gamme de pression d'usage de l'ensemble monté, des roulages à vitesse constante, à charge constante et en ligne droite ont été entrepris sur trois sols de fermeté différente. Une identification, par une méthode des moindre carrées a permis d'évaluer le coefficient $\alpha$ de l'ensemble monté, soit dans notre cas une valeur de 2,4.

Enfin, à l'aide de la calibration préalablement effectuée on obtient une valeur de fermeté du sol ferme relativement à la celle du sol meuble de l'ordre de 5,95 ce qui est correct en raison de la nature différenciée des sols.

De plus, en modifiant la pression de gonflage du même ensemble monté jusqu'à 2,6 bars, les mesures de courbure pour les deux mêmes sols ont été entreprises.

Pour le sol ferme, le protocole de mesure identifie une valeur de courbure en contact avec le sol $\rho_{A'}$ d'environ 1 degré et d'une valeur de courbure hors contact avec le sol $\rho_{B'}$ d'environ 6,1 degrés. De ce fait la valeur de courbure relative C' de l'ordre de 0,16 est identifiée pour le sol ferme.

Pour le sol meuble, on identifie une valeur de courbure en contact avec le sol $\rho_A$ d'environ 4,3 degrés et d'une valeur de courbure hors contact avec le sol $\rho_B$ d'environ 6,0 degrés. Par conséquent la valeur de courbure relative C pour le sol meuble est de l'ordre de 0,72. Et de façon similaire, on obtient une valeur de fermeté du sol ferme relativement à la celle du sol meuble de l'ordre de 6,04.

Enfin, pour ce même ensemble monté, on identifie un coefficient $\beta2$ de la loi empirique de l'ordre de -0,4 pour un coefficient $\gamma$ idientifié à 0,79 décrivant l'évolution de la rigidité verticale de cet ensemble monté avec la pression de gonflage.

**Revendications**

1. Méthode d'évaluation de la fermeté d'un sol sur lequel roule un véhicule ayant au moins un ensemble monté présentant une rigidité radiale $k_{radial}$ comprenant une enveloppe pneumatique ayant un sommet, deux flancs et deux bourrelets, équipée d'au moins un capteur sensible à la courbure circonférentielle positionné au droit du sommet, comprenant les étapes suivantes :

- Estimer une valeur de courbure $\rho_A$ de l'enveloppe pneumatique correspondant à un premier régime permanent de l'enveloppe pneumatique en contact avec le sol ;
- Evaluer la fermeté relative du sol par rapport à la rigidité radiale $k_{radial}$ de l'ensemble monté comme une fonction de la valeur de courbure $\rho_A$ de l'enveloppe pneumatique.

2. Méthode d'évaluation de la fermeté d'un sol selon la revendication précédente, comprenant les étapes suivantes :

- Estimer une valeur de courbure $\rho_B$ de l'enveloppe pneumatique correspondant à un second régime permanent de l'enveloppe pneumatique hors contact avec le sol ;
- Evaluer la fermeté relative du sol par rapport à la rigidité radiale $k_{radial}$ de l'ensemble monté comme une fonction des valeurs de courbure $\rho_A$ et $\rho_B$ de l'enveloppe pneumatique.

3. Méthode d'évaluation de la fermeté d'un sol selon la revendication précédente, comprenant les étapes suivantes :

- Etablir la courbure relative C comme le rapport des courbures $\rho_A / \rho_B$ de l'enveloppe pneumatique en contact ou hors contact avec le sol ;
- Evaluer la fermeté relative du sol par rapport à la rigidité radiale $k_{radial}$ de l'ensemble monté comme une fonction de la courbure relative C.

4. Méthode d'évaluation de la fermeté d'un sol selon la revendication précédente, comprenant les étapes suivantes :

- Evaluer la fermeté relative du sol par rapport à la rigidité radiale $k_{radial}$ de l'ensemble monté en appliquant la formule suivante où les paramètres $\alpha$, $\beta_1$ et $\beta_2$ sont des coefficients dépendants de l'ensemble monté et P la pression de gonflage de l'ensemble monté:

$$\frac{k_{sol}}{k_{radial}} = \frac{|1 + \alpha * C - (1 + \alpha) * C^2|}{\beta_1 * P^{\beta_2} * C}$$

5. Méthode d'évaluation de la fermeté du sol selon l'une quelconque des revendications précédentes dans laquelle l'enveloppe pneumatique définissant une aire de contact, par application des conditions nominales d'usage de l'ensemble monté, présentant une dimension Ladc selon la direction axiale de l'ensemble monté, le au moins un capteur évalue à chaque mesure la courbure circonférentielle moyenne sur une longueur comprise entre 10% et 80% de la dimension Ladc.

6. Méthode d'évaluation de la fermeté du sol selon la revendication 5 dans laquelle l'enveloppe pneumatique définissant une aire de contact, présentant une dimension ladc selon la direction transversale de l'ensemble monté, le au moins un capteur évalue à chaque mesure la courbure circonférentielle moyenne sur une largeur comprise entre 10% et 80% de la largeur ladc.

7. Méthode d'évaluation de la fermeté du sol selon l'une des revendications précédentes, dans laquelle le capteur mesure la courbure moyenne d'une zone du sommet de l'enveloppe pneumatique en contact avec le sol homogène en terme de rigidité radiale.

8. Méthode d'évaluation de la fermeté du sol selon la revendication précédente dans laquelle le capteur mesure la courbure moyenne d'une zone du sommet au droit d'un élément de sculpture de la bande de roulement de l'enveloppe pneumatique.

9. Méthode d'évaluation de la fermeté d'un sol selon l'une des revendications précédentes, dans laquelle l'estimation des valeurs de courbure correspondant aux premier et second régimes permanents en matière de conditions aux limites de l'enveloppe pneumatique comprend les étapes suivantes :

- Obtenir un signal enregistré du capteur sensible à la courbure correspondant à N tours de roue de l'ensemble monté, N étant un entier strictement supérieur à 1 ;
- Identifier sur le signal enregistré les 2N maximums locaux $Y_{2N}$, et leur abscisses correspondantes $X_{2N}$ ;

- Pour tout j étant un entier strictement supérieur à 1 et strictement inférieur 2N:

Si $(X_j - X_{j-1}) < (X_{j+1} - Xj)$,

a) Isoler un premier signal sur le signal enregistré entre le maxima central $(X_j, Yj)$ et le maxima précédent $(X_{j-1}, Y_{j-1})$ ;
b) Identifier la valeur de courbure en régime permanent nommé $\rho_j$ sur le premier signal;
c) Isoler un second signal sur le signal enregistré entre le maxima central $(X_j, Y_j)$ et le maxima suivant $(X_{j+1}, Y_{j+1})$; et
d) Identifier la valeur de courbure en régime permanent nommé $\rho_{j+1}$ sur le second signal;

Sinon

a) Isoler un premier signal sur le signal enregistré entre le maxima central $(X_j, Y_j)$ et le maxima suivant $(X_{j+1}, Y_{j+1})$ ;
b) Identifier la valeur de courbure en régime permanent nommé $\rho_j$ sur premier signal;
c) Isoler un second signal sur le signal enregistré entre le maxima central $(X_j, Y_j)$ et le maxima précédent $(X_{j-1}, Y_{j-1})$ ; et
d) Identifier la valeur de courbure en régime permanent nommé $\rho_{j+1}$ sur le second signal;

- Etablir la courbure de l'enveloppe pneumatique en condition de contact avec le sol $\rho_A$ comme étant la moyenne des au moins une valeur de courbure $\rho_j$ et la courbure de l'enveloppe pneumatique en condition hors contact avec le sol $\rho_B$ comme étant la moyenne des au moins une valeur de courbure $\rho_{j+1}$.

10. Méthode d'évaluation de la fermeté d'un sol selon la revendication 9, dans laquelle l'obtention du signal enregistré du capteur sensible à la courbure correspondant à N tours de roue de l'ensemble monté comprend les étapes suivantes :

- Enregistrer un signal émis par le capteur sensible à la courbure correspondant à un tour de roue de l'ensemble monté ;
- Périodiser le signal émis sur N périodes, N étant un entier supérieur à 1.

11. Méthode d'évaluation de la fermeté d'un sol selon l'une des revendications précédentes 9 et 10, dans laquelle le capteur sortant une grandeur indirecte de la courbure circonférentielle de l'enveloppe pneumatique faisant intervenir au moins un paramètre variable la méthode comprend une étape supplémentaire :

- Corriger la grandeur indirecte sur le signal enregistré à l'aide du au moins un paramètre variable.

12. Méthode d'évaluation de la fermeté du sol selon l'une des revendications 9 à 11, dans laquelle la courbure de l'enveloppe pneumatique en condition de contact avec le sol $\rho_j$ est évaluée sur un signal réduit du premier signal.

13. Méthode d'évaluation de la fermeté du sol selon la revendication 12, dans laquelle le signal réduit du premier signal correspond à la première moitié du premier signal.

14. Méthode d'évaluation de la fermeté du sol selon la revendication 12, dans laquelle le signal réduit du premier signal correspond à la seconde moitié du premier signal.

15. Méthode d'évaluation de la fermeté du sol .selon l'une des revendications 13 et 14 dans laquelle l'identification des valeurs de courbure en condition de contact avec le sol $\rho_j$ comprend l'étape suivante :

- Symétriser le signal réduit sur un intervalle correspondant au signal réduit pour obtenir un nouveau signal en forme de créneau.

**Patentansprüche**

1. Verfahren zur Bewertung der Festigkeit eines Bodens, auf dem ein Fahrzeug fährt, das mindestens eine montierte Einheit mit einer radialen Steifheit $k_{radial}$ hat, die einen Reifenmantel mit einem Scheitel, zwei Flanken und einem Wulst enthält, der mit mindestens einem für die Umfangskrümmung empfindlichen Sensor ausgestattet ist, der gegenüber dem Scheitel positioniert ist, das die folgenden Schritt enthält:

- Schätzen eines Krümmungswerts $\rho_A$ des Reifenmantels entsprechend einem ersten Beharrungszustand des Reifenmantels in Kontakt mit dem Boden;
- Bewerten der relativen Festigkeit des Bodens bezüglich der radialen Steifheit $k_{radial}$ der montierten Einheit als eine Funktion des Krümmungswerts $\rho_A$ des Reifenmantels.

2. Verfahren zur Bewertung der Festigkeit eines Bodens nach dem vorhergehenden Anspruch, das die folgenden Schritte enthält:

- Schätzen eines Krümmungswerts $\rho_B$ des Reifenmantels entsprechend einem zweiten Beharrungszustand des Reifenmantels ohne Kontakt mit dem Boden;
- Bewerten der relativen Festigkeit des Bodens bezüglich der radialen Steifheit $k_{radial}$ der montierten Einheit als eine Funktion der Krümmungswerte $\rho_A$ und $\rho_B$ des Reifenmantels.

3. Verfahren zur Bewertung der Festigkeit eines Bodens nach dem vorhergehenden Anspruch, das die folgenden Schritte enthält:

- Erstellen der relativen Krümmung C als das Verhältnis der Krümmungen $\rho_A/\rho_B$ des Reifenmantels in Kontakt oder ohne Kontakt mit dem Boden;
- Bewerten der relativen Festigkeit des Bodens bezüglich der radialen Steifheit $k_{radial}$ der montierten Einheit als eine Funktion der relativen Krümmung C.

4. Verfahren zur Bewertung der Festigkeit eines Bodens nach dem vorhergehenden Anspruch, das die folgenden Schritte enthält:

- Bewerten der relativen Festigkeit des Bodens bezüglich der radialen Steifheit $k_{radial}$ der montierten Einheit durch Anwenden der folgenden Formel, in der die Parameter $\alpha$, $\beta_1$ und $\beta_2$ abhängige Koeffizienten der montierten Einheit und P der Fülldruck der montierten Einheit ist:

$$\frac{k_{sol}}{k_{radial}} = \frac{|1 + a * C - (1 + a) * C^2|}{\beta_1 * P^{\beta 2} * C}$$

5. Verfahren zur Bewertung der Festigkeit des Bodens nach einem der vorhergehenden Ansprüche, wobei, da der Reifenmantel durch Anwendung der Nennbedingungen der Nutzung der montierten Einheit einen Kontaktbereich definiert, der eine Abmessung Ladc gemäß der axialen Richtung der montierten Einheit aufweist, der mindestens eine Sensor bei jeder Messung die mittlere Umfangskrümmung über eine Länge zwischen 10% und 80% der Abmessung Ladc bewertet.

6. Verfahren zur Bewertung der Festigkeit des Bodens nach Anspruch 5, wobei, da der Reifenmantel einen Kontaktbereich definiert, der eine Abmessung ladc gemäß der Querrichtung der montierten Einheit aufweist, der mindestens eine Sensor bei jeder Messung die mittlere Umfangskrümmung über eine Breite zwischen 10% und 80% der Breite ladc bewertet.

7. Verfahren zur Bewertung der Festigkeit des Bodens nach einem der vorhergehenden Ansprüche, wobei der Sensor die mittlere Krümmung eines Bereichs des Scheitels des Reifenmantels in Kontakt mit dem Boden misst, der bezüglich der radialen Steifheit homogen ist.

8. Verfahren zur Bewertung der Festigkeit des Bodens nach dem vorhergehenden Anspruch, wobei der Sensor die mittlere Krümmung eines Bereichs des Scheitels gegenüber einem Profilelement des Laufstreifens des Reifenmantels misst.

9. Verfahren zur Bewertung der Festigkeit eines Bodens nach einem der vorhergehenden Ansprüche, wobei die Schätzung der Krümmungswerte entsprechend den ersten und zweiten Beharrungszuständen bezüglich von Bedingungen an den Grenzen des Reifenmantels die folgenden Schritte enthält:

- Erhalt eines gespeicherten Signals des für die Krümmung empfindlichen Sensors entsprechend N Radumdrehungen der montierten Einheit, wobei N eine ganze Zahl strikt größer als 1 ist;
- Erkennen in dem gespeicherten Signal der 2N lokalen Maxima $Y_{2N}$ und ihrer entsprechenden Abszissen $X_{2N}$;
- für jedes j eine ganze Zahl strikt größer als 1 und strikt kleiner als 2N:

wenn gilt $(X_j-X_{j-1}) < (X_{j+1}-X_j)$,

a) Isolieren eines ersten Signals auf dem gespeicherten Signal zwischen dem zentralen Maximum $(X_j, Y_j)$ und dem vorhergehenden Maximum $(X_{j-1}, Y_{j-1})$ ;
b) Erkennen des Krümmungswerts im Beharrungszustand genannt $\rho_j$ auf dem ersten Signal;
c) Isolieren eines zweiten Signals auf dem gespeicherten Signal zwischen dem zentralen Maximum $(X_j, Y_j)$ und dem folgenden Maximum $(X_{j+1}, Y_{j+1})$ ; und
d) Erkennen des Krümmungswerts im Beharrungszustand genannt $\rho_{j+1}$ auf dem zweiten Signal;

sonst

a) Isolieren eines ersten Signals auf dem gespeicherten Signal zwischen dem zentralen Maximum $(X_j, Y_j)$ und dem folgenden Maximum $(X_{j+1}, Y_{j+1})$ ;
b) Erkennen des Krümmungswerts im Beharrungszustand genannt $\rho_j$ auf dem ersten Signal;
c) Isolieren eines zweiten Signals auf dem gespeicherten Signal zwischen dem zentralen Maximum $(X_j, Y_j)$ und dem vorhergehenden Maximum $(X_{j-1}, Y_{j-1})$ ; und
d) Erkennen des Krümmungswerts im Beharrungszustand genannt $\rho_{j+1}$ auf dem zweiten Signal;

- Erstellen der Krümmung des Reifenmantels im Zustand des Kontakts mit dem Boden $\rho_A$ als der Mittelwert der mindestens einen Krümmungswerte $\rho_j$ und der Krümmung des Reifenmantels im Zustand ohne Kontakt mit dem Boden $\rho_B$ als der Mittelwert der mindestens einen Krümmungswerte $\rho_{j+1}$.

10. Verfahren zur Bewertung der Festigkeit eines Bodens nach Anspruch 9, wobei der Erhalt des gespeicherten Signals des für die Krümmung empfindlichen Sensors entsprechend N Radumdrehungen der montierten Einheit die folgenden Schritte enthält:

- Speichern eines vom für die Krümmung empfindlichen Sensor gesendeten Signals entsprechend einer Radumdrehung der montierten Einheit;
- Periodisieren des gesendeten Signals über N Perioden, wobei N eine ganze Zahl größer als 1 ist.

11. Verfahren zur Bewertung der Festigkeit eines Bodens nach einem der vorhergehenden Ansprüche 9 und 10, wobei, da der Sensor eine indirekte Größe der Umfangskrümmung des Reifenmantels ausgibt, die mindestens einen variablen Parameter einsetzt, das Verfahren einen zusätzlichen Schritt enthält:

- Korrigieren der indirekten Größe auf dem gespeicherten Signal mit Hilfe des mindestens einen variablen Parameters.

12. Verfahren zur Bewertung der Festigkeit des Bodens nach einem der Ansprüche 9 bis 11, wobei die Krümmung des Reifenmantels im Zustand des Kontakts mit dem Boden $\rho_j$ auf einem reduzierten Signal des ersten Signals bewertet wird.

13. Verfahren zur Bewertung der Festigkeit des Bodens nach Anspruch 12, wobei das reduzierte Signal des ersten Signals der ersten Hälfte des ersten Signals entspricht.

14. Verfahren zur Bewertung der Festigkeit des Bodens nach Anspruch 12, wobei das reduzierte Signal des ersten Signals der zweiten Hälfte des ersten Signals entspricht.

15. Verfahren zur Bewertung der Festigkeit des Bodens nach einem der Ansprüche 13 und 14, wobei die Erkennung der Krümmungswerte im Zustand des Kontakts mit dem Boden $\rho_j$ den folgenden Schritt enthält:

- Symmetrisieren des reduzierten Signals auf ein Intervall entsprechend dem reduzierten Signal, um ein neues Signal in Form eines Rechtecksignals zu erhalten.

**Claims**

1.  Method for evaluating the firmness of the ground on which is running a vehicle equipped with at least one mounted assembly having a radial stiffness $k_{radial}$ comprising a tyre casing having a crown, two sidewalls and two beads, equipped with at least one sensor sensitive to the circumferential curvature and positioned in line with the crown, comprising the following steps:.

    - Estimating a value of the curvature $\rho_A$ of the tyre casing corresponding to first steady-state conditions of the tyre casing in contact with the ground;
    - Evaluating the relative firmness of the ground with respect to the radial stiffness $k_{radial}$ of the mounted assembly as being a function of the value of the curvature $\rho_A$ of the tyre casing.

2.  Method for evaluating the firmness of the ground according to the preceding claim, comprising the following steps:

    - Estimating a value of the curvature $\rho_B$ of the tyre casing corresponding to second steady-state conditions of the tyre casing not in contact with the ground;
    - Evaluating the relative firmness of the ground with respect to the radial stiffness $k_{radial}$ of the mounted assembly as being a function of the values of the curvature $\rho_A$ and $\rho_B$ of the tyre casing.

3.  Method for evaluating the firmness of the ground according to the preceding claim, comprising the following steps:

    - Establishing the relative curvature C as being the ratio $\rho_A/ \rho_B$ of the curvatures of the tyre casing in contact or not in contact with the ground;
    - Evaluating the relative firmness of the ground with respect to the radial stiffness $k_{radial}$ of the mounted assembly as being a function of the relative curvature C.

4.  Method for evaluating the firmness of the ground according to the preceding claim, comprising the following steps:

    - Evaluating the relative firmness of the ground with respect to the radial stiffness $k_{radial}$ of the mounted assembly by applying the following formula in which the parameters $\alpha$, $\beta_1$ and $\beta_2$ are coefficients dependent on the mounted assembly and P is the inflation pressure of the mounted assembly:

$$\frac{k_{ground}}{k_{radial}} = \frac{|1 + \alpha * C - (1 + \alpha) * C^2|}{\beta_1 * P^{\beta_2} * C}$$

5.  Method for evaluating the firmness of the ground according to any one of the preceding claims, wherein, with the tyre casing defining a contact patch, by applying nominal conditions of use of the mounted assembly, this contact patch having a dimension Ladc in the axial direction of the mounted assembly, the at least one sensor, upon each measurement, evaluates the mean circumferential curvature over a length comprised between 10% and 80% of the dimension Ladc.

6.  Method for evaluating the firmness of the ground according to Claim 5, wherein, with the tyre casing defining a contact patch having a dimension ladc in the transverse direction of the mounted assembly, the at least one sensor, upon each measurement, evaluates the mean circumferential curvature over a width comprised between 10% and 80% of the width ladc.

7.  Method for evaluating the firmness of the ground according to one of the preceding claims, wherein the sensor measures the mean curvature of a zone of the crown of the tyre casing in contact with the ground that is homogeneous in terms of radial stiffness.

8.  Method for evaluating the firmness of the ground according to the preceding claim, wherein the sensor measures the mean curvature of a zone of the crown in line with a tread pattern element of the tyre casing.

9.  Method for evaluating the firmness of the ground according to one of the preceding claims, wherein the estimation of the curvature values corresponding to the first and second steady-state conditions in terms of the boundary conditions of the tyre casing comprises the following steps:

- Obtaining a recorded signal from the sensor sensitive to curvature corresponding to N revolutions of the wheel of the mounted assembly, N being an integer strictly greater than 1;
- Identifying in the recorded signal the 2N local maxima $Y_{2N}$, and their corresponding abscissa values $X_{2N}$;
- For any j, being an integer strictly greater than 1 and strictly less than 2N:

If $(X_j - X_{j-1}) < (X_{j+1} - Xj)$,

a) isolating a first signal in the recorded signal between the central maximum $(X_j, Yj)$ and the previous maximum $(X_{j-1}, Y_{j-1})$;
b) identifying the steady-state conditions curvature value denoted $\rho_j$ in the first signal;
c) isolating a second signal in the recorded signal between the central maximum $(X_j, Y_j)$ and the next maximum $(X_{j+1}, Y_{j+1})$; and
d) identifying the steady-state conditions curvature value denoted $\rho_{j+1}$ in the second signal;

Else

a) isolating a first signal in the recorded signal between the central maximum $(X_j, Y_j)$ and the next maximum $(X_{j+1}, Y_{j+1})$;
b) identifying the steady-state conditions curvature value denoted $\rho_j$ in first signal;
c) isolating a second signal in the recorded signal between the central maximum $(X_j, Y_j)$ and the previous maximum $(X_{j-1}, Y_{j-1})$; and
d) identifying the steady-state conditions curvature value denoted $\rho_{j+1}$ in the second signal;

- Establishing the curvature of the tyre casing under conditions of contact with the ground $\rho_A$ as being the mean of the at least one curvature value $\rho_j$ and the curvature of the tyre casing under conditions not in contact with the ground $\rho_B$ as being the mean of the at least one curvature value $\rho_{j+1}$.

10. Method for evaluating the firmness of the ground according to Claim 9, wherein the obtaining of the recorded signal from the sensor sensitive to the curvature corresponding to N revolutions of the wheel of the mounted assembly, comprises the following steps:

- Recording a signal emitted by the sensor sensitive to the curvature corresponding to one revolution of the wheel of the mounted assembly;
- Periodizing the signal emitted over N periods, N being an integer greater than 1.

11. Method for evaluating the firmness of the ground according to either one of the preceding Claims 9 and 10, wherein, with the sensor outputting an indirect parameter for the circumferential curvature of the tyre casing involving at least one parameter that is variable, the method comprises an additional step:

- Correcting the indirect parameter on the signal recorded using the at least one variable parameter.

12. Method for evaluating the firmness of the ground according to one of Claims 9 to 11, wherein the curvature of the tyre casing under conditions of contact with the ground $\rho_j$ is evaluated on a signal reduced from the first signal.

13. Method for evaluating the firmness of the ground according to Claim 12, wherein the signal reduced from the first signal corresponds to the first half of the first signal.

14. Method for evaluating the firmness of the ground according to Claim 12, wherein the signal reduced from the first signal corresponds to the second half of the first signal.

15. Method for evaluating the firmness of the ground according to either of Claims 13 and 14, wherein the identification of the values for curvature under conditions of contact with the ground $\rho_j$ comprises the following step:

- Making the reduced signal symmetrical over an interval corresponding to the reduced signal in order to obtain a new signal in the form of a square wave.

| 101 | | 102 | | 103 |
|---|---|---|---|---|
| Autres signaux | | Signal Courbure | | Codeur |

Synchronisation 104

| Autres signaux N tours | 105 | Signal Courbure N tours | 106 |
|---|---|---|---|

Signal corrigé Courbure N tours 108

Determination des Maximums locaux $(X_j, Y_j)$ 110

$(X_j - X_{j-1}) < (X_{j+1} - X_j)$      $(X_{j+1} - X_j) < (X_j - X_{j-1})$

111 Détermination valeurs plateau $\rho_j$ sur $[X_{j-1}, X_j]$

Détermination valeurs plateau $\rho_{j+1}$ sur $[X_{j-1}, X_j]$ 112

Détermination valeurs plateau $\rho_{j+1}$ sur $[X_j, X_{j+1}]$ 113

114 Détermination valeurs plateau $\rho_j$ sur $[X_j, X_{j+1}]$

115 Détermination valeur courbure hors contact avec le sol $\rho_B$

Détermination valeur courbure en contact avec le sol $\rho_A$ 116

Identification valeur relative de fermeté sol

120

**FIG. 1**

18

FIG. 2

FIG. 3a

FIG. 3b

**EP 3 681 739 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 3031632 A2
- US 20030154007 A1
- EP 0887211 A1
- EP 1820670 A1